# EUROPÄISCHE PATENTSCHRIFT

(11) **EP 4 150 212 B1**
(45) Veröffentlichungstag und Bekanntmachung des Hinweises auf die Patenterteilung: **26.11.2025**
(21) Anmeldenummer: 21717338.4
(22) Anmeldetag: 30.03.2021
(51) Int. Cl.: F04C 18/02

(54) **VERDRÄNGERMASCHINE, VERFAHREN, FAHRZEUGKLIMAANLAGE UND FAHRZEUG**
POSITIVE DISPLACEMENT MACHINE, METHOD, VEHICLE AIR CONDITIONING SYSTEM, AND VEHICLE
MACHINE À DÉPLACEMENT POSITIF, PROCÉDÉ, SYSTÈME DE CLIMATISATION DE VÉHICULE, ET VÉHICULE ASSOCIÉ

(30) Priorität: 09.04.2020 DE 102020110097
(43) Veröffentlichungstag der Anmeldung: 22.03.2023
(73) Patentinhaber: OET GmbH, 6890 Lustenau (AT)
(72) Erfinder: BUSCH, Christian, 6800 Feldkirch (AT); BONT, Jochen, 6800 Feldkirch (AT); ÖTTL, Markus, 6890 Lustenau (AT); LÄSSER, Roman, 6922 Wolfurt (AT)
(74) Vertreter: Meissner Bolte Partnerschaft mbB
(86) Internationale Anmeldenummer: PCT/EP2021/058251
(87) Internationale Veröffentlichungsnummer: WO 2021/204592

(56) Entgegenhaltungen:
- EP-A1- 2 474 740
- WO-A1-2016/189598
- DE-B3- 102017 105 175
- DE-B3- 102017 110 913

## Beschreibung

Die Erfindung betrifft eine Verdrängermaschine nach dem Spiralprinzip nach dem Oberbegriff des Anspruchs 1. Ferner betrifft die Erfindung ein Verfahren, eine Fahrzeugklimaanlage und ein Fahrzeug.

Eine Verdrängermaschine der eingangs genannten Art ist aus DE 10 2017 105 175 B3 bekannt. In DE 10 2017 105 175 B3 ist ein Scrollverdichter beschrieben, der eine Verdrängerspirale und eine Gegenspirale umfasst. Die Verdrängerspirale greift in die Gegenspirale ein. Durch die orbitierende Verdrängerspirale bilden sich Verdichtungskammern, in denen ein Kühlmittel verdichtet wird. Damit eine Verdichtung des Kühlmittels möglich ist, muss die Verdrängerspirale dicht an der Gegenspirale anliegen. Daher ist es vorteilhaft, wenn die Verdrängerspirale an die Gegenspirale angepresst wird. Dazu ist an der der Gegenspirale abgewandten Seite der Verdrängerspirale eine Gegendruckkammer angeordnet. Eine solche Gegendruckkammer ist auch unter der Bezeichnung Back-Pressure-Raum bekannt. Die Gegendruckkammer bzw. der Back-Pressure-Raum hat die Funktion, einen Druck aufzubauen. Hierfür umfasst die Verdrängerspirale zwei Öffnungen, welche die Gegendruckkammer bzw. den Back-Pressure-Raum mit einer Verdichtungskammer fluidverbinden. Der Druck im Back-Pressure-Raum beaufschlagt die Verdrängerspirale mit einer Kraft, die die Verdrängerspirale an die Gegenspirale presst, so dass die beiden Spiralen zueinander fluiddicht abgedichtet sind.

Bei bekannten Scrollverdichtern der eingangs genannten Art muss der Druck in der Gegendruckkammer gerade groß genug sein, um die Verdrängerspirale derart an die Gegenspirale zu pressen, dass die Verdrängerspirale fluiddicht an der Gegenspirale anliegt. Der Druck sollte jedoch nicht zu groß sein, so dass Reibungskräfte auftreten, die die orbitierende Bewegung der Verdrängerspirale bremsen oder zu Leistungseinbußen führen.

Das Bereitstellen eines ausreichend hohen Drucks für die Gegendruckkammer um die Verdrängerspirale an die Gegenspirale zu pressen und dabei möglichst wenig Leistungseinbußen zu verursachen, ist mit konstruktivem Aufwand verbunden.

Der vorliegenden Erfindung liegt daher die Aufgabe zu Grunde, eine Verdrängermaschine anzugeben, bei der das Erzeugen des Drucks in der Gegendruckammer zum Anpressen der Verdrängerspirale an die Gegenspirale verbessert ist, so dass eine einfache und kostengünstige Konstruktion der Verdrängermaschine möglich ist. Ferner ist es Aufgabe der Erfindung ein Verfahren, eine Fahrzeugklimaanlage und ein Fahrzeug anzugeben.

Erfindungsgemäß wird die Aufgabe mit Blick auf
- die Verdrängermaschine durch den Gegenstand des Anspruchs 1,
- das Verfahren durch den Gegenstand des Anspruchs 11,
- die Fahrzeugklimaanlage durch den Gegenstand des Anspruchs 12 und
- das Fahrzeug durch den Gegenstand des Anspruchs 13
gelöst.

Konkret wird die Aufgabe durch eine Verdrängermaschine nach dem Spiralprinzip, insbesondere Scrollverdichter, mit einer Hochdruckkammer, einer Niederdruckkammer, einer orbitierenden Verdrängerspirale, einer Gegenspirale und einer Gegendruckkammer, die zwischen der Niederdruckkammer und der Verdrängerspirale angeordnet ist, gelöst. In der Gegenspirale ist in einem Hochdruckbereich eine Auslassöffnung zentral angeordnet, durch die im Betrieb ein verdichtetes Arbeitsmedium in die Hochdruckkammer strömt, und wobei die Verdrängerspirale wenigstens eine erste und eine zweite Durchgangsöffnung zur Fluidverbindung mit der Gegendruckkammer aufweist, wobei wenigstens die erste Durchgangsöffnung im Bereich der Auslassöffnung angeordnet ist, so dass sich im Betrieb die erste Durchgangsöffnung und die Auslassöffnung temporär zumindest abschnittsweise überdecken, wobei wenigstens die erste Durchgangsöffnung im Bereich der Auslassöffnung angeordnet ist, so dass sich im Betrieb die erste Durchgangsöffnung und die Auslassöffnung temporär zumindest abschnittsweise überdecken, wobei die erste Durchgangsöffnung in einem Winkelbereich des Drehwinkels der orbitierenden Verdrängerspirale von 435° bis 650° mit der Gegendruckkammer fluidleitend verbunden ist.

Die Hochdruckkammer ist der Bereich, in den das verdichtete Arbeitsmedium strömt, bevor es wieder einem Kreislauf, beispielsweise einem Kühlkreislauf, zugeführt wird.

Die Niederdruckkammer kann auch als Ansaugraum bezeichnet werden. Aus der Niederdruckkammer strömt das Gas von radial außen zwischen die Gegenspirale und die Verdrängerspirale.

Unter der orbitierenden Bewegung der Verdrängerspirale ist eine Bewegung auf einer Kreisbahn zu verstehen.

Bei dem Arbeitsmedium handelt es sich vorzugsweise um ein Kühlfluid, besonders bevorzugt um ein gasförmiges Kühlfluid, beispielsweise CO₂.

Die Auslassöffnung ist zentral bzw. mittig in der Gegenspirale angeordnet. Mit anderen Worten ist die Auslassöffnung im Bereich des Mittelpunkts der Gegenspirale angeordnet.

Die Auslassöffnung weist vorzugsweise ein Ventil auf. Durch die Auslassöffnung strömt das Arbeitsmedium nach dem Verdichten in die Hochdruckkammer. Durch die Hochdruckkammer wird das Arbeitsmedium wieder einem Arbeitskreislauf, insbesondere in einen Kühlkreislauf, zugeführt.

Die erste Durchlassöffnung und die zweite Durchlassöffnung stellen jeweils eine Fluidverbindung mit der Gegendruckkammer her.

Wenigstens die erste Durchgangsöffnung ist im Bereich der zentralen Auslassöffnung angeordnet. Die Durchgangsöffnungen sind in der Verdrängerspirale und die Auslassöffnung ist in der Gegenspirale angeordnet. Die erste Durchgangsöffnung ist daher der Auslassöffnung gegenüberliegend angeordnet. Dadurch ist es möglich, die erste Durchgangsöffnung wenigstens temporär in einem Hochdruckbereich anzuordnen.

Die erste Durchgangsöffnung und die Auslassöffnung sind in zueinander versetzten parallelen Ebenen angeordnet und überdecken sich im Betrieb der Verdrängermaschine temporär zumindest abschnittsweise. Überdecken bedeutet hier, dass in einer Draufsicht der beiden Ebenen die erste Durchgangsöffnung eine Außenkontur der Auslassöffnung tangiert, schneidet und/oder berührt.

Mit anderen Worten ist überdecken so zu verstehen, dass bei einem Übereinanderlegen der parallelen Ebenen die erste Durchgangsöffnung und die Auslassöffnung zu wenigstens einem Zeitpunkt im Betrieb der Verdrängerspirale wenigstens einen gemeinsamen Schnittpunkt aufweisen.

Dadurch ergibt sich der Vorteil, dass ein ausreichend großer Druck in der Gegendruckkammer erzeugt werden kann, um die Verdrängerspirale an die Gegenspirale anzupressen.

Da sich die erste Durchgangsöffnung und die Auslassöffnung temporär zumindest abschnittsweise überdecken, verbleibt die erste Durchgangsöffnung über einen möglichst großen Winkelbereich des Drehwinkels der Verdrängerspirale und somit über einen möglichst langen Zeitraum in dem Hochdruckbereich und stellt eine Fluidverbindung mit der Gegendruckkammer her.

Durch die Fluidverbindung wird in der Gegendruckkammer ein Druck erzeugt. Der Druck, um die Verdrängerspirale an die Gegenspirale zu pressen, ist durch die temporäre Anordnung der ersten Durchgangsöffnung in einem Bereich der Auslassöffnung derart angepasst, dass Reibungskräfte, welche die orbitierende Bewegung der Verdrängerspirale bremsen und zu Leistungseinbußen führen, möglichst gering ausfallen und gleichzeitig die Verdrängerspirale ausreichend fluiddicht an der Gegenspirale angeordnet ist.

Ferner ist durch die zwei Durchgangsöffnungen eine kontinuierliche Fluidverbindung mit der Gegendruckkammer möglich. Weitere Fluidverbindungen mit der Gegendruckkammer können so entfallen. Das ermöglicht eine kompaktere und kostengünstigere Bauform der Verdrängermaschine.

Bevorzugte Ausführungsformen der Erfindung sind in den Unteransprüchen angegeben.

In einer besonders bevorzugten Ausführungsform ist die zweite Durchgangsöffnung in einem Bereich der Verdrängerspirale angeordnet, der im Betrieb einen geringeren Druck als der Druck im Hochdruckbereich aufweist.

Dadurch ist es möglich, die Gegendruckkammer dann mit einem hohen Druck zu beaufschlagen, wenn beispielsweise das verdichtete Arbeitsmedium in den Verdichtungskammern eine große Kraft in Richtung der Gegendruckkammer auf die Verdrängerspirale ausübt. Ist der Druck, mit dem die Verdrängerspirale von dem verdichteten Arbeitsmedium beaufschlagt ist, niedrig, kann der Druck in der Gegendruckkammer auch niedrig eingestellt werden, um Leistungseinbußen zu minimieren.

Gemäß der Erfindung ist die erste Durchgangsöffnung in einem Winkelbereich des Drehwinkels der orbitierenden Verdrängerspirale von 435° bis 650° mit der Gegendruckkammer fluidleitend verbunden.

Der Winkelbereich des Drehwinkels, in dem die erste Durchgangsöffnung mit der Gegendruckkammer fluidverbunden ist, ist vorteilhaft, da so über einen möglichst großen Bereich des Drehwinkels der orbitierenden Verdrängerspirale eine Fluidverbindung der Verdichtungskammern mit der Gegendruckkammer möglich ist. Ferner ist die Verdichtung des Arbeitsmediums und somit der Druck nach einem großen Drehwinkel hoch, so dass die Gegendruckkammer mit einem ausreichend hohen Druck beaufschlagt werden kann.

In einer bevorzugten Ausführungsform weist die erste Durchgangsöffnung eine temporäre Überdeckung mit der Auslassöffnung zwischen 1% und 100%, insbesondere zwischen 10% und 90%, insbesondere zwischen 20% und 80%, insbesondere zwischen 30% und 70%, insbesondere zwischen 40% und 60%, auf.

Durch eine möglichst große Überschneidung ist die erste Durchgangsöffnung möglichst lange im Hochdruckbereich der Verdrängermaschine angeordnet. Dadurch ist eine vorteilhaft große Zeitspanne möglich, in der die erste Durchgangsöffnung geöffnet ist. Durch verschiedene Abstufungen der Überschneidung ist die Zeitspanne anpassbar, in der sich die erste Durchgangsöffnung und die Auslassöffnung überdecken.

In einer weiteren bevorzugten Ausführungsform sind im Betrieb temporär wenigstens eine erste und eine zweite Verdichtungskammer zur Aufnahme eines Arbeitsmediums gebildet und die zweite Durchgangsöffnung ist in der Verdrängerspirale angeordnet, so dass im Betrieb durch die orbitierende Bewegung der Verdrängerspirale die zweite Durchgangsöffnung temporär zumindest abschnittsweise in der ersten Verdichtungskammer und anschließend temporär zumindest abschnittsweise in der zweiten Verdichtungskammer angeordnet ist.

Dadurch ist die Gegendruckkammer zusätzlich durch die zweite Durchgangsöffnung abwechselnd temporär mit der ersten Verdichtungskammer und mit der zweiten Verdichtungskammer fluidverbunden. Das ermöglicht es, dass die Gegendruckkammer wenigstens mit einer der Verdichtungskammern und/oder dem Hochdruckbereich im Bereich des Auslasses fluidverbunden ist.

Es ist besonders bevorzugt, wenn die zweite Durchgangsöffnung in einem Winkelbereich des Drehwinkels der orbitierenden Verdrängerspirale von 95° bis 250° in der ersten Verdichtungskammer angeordnet ist und in einem Winkelbereich von 285° bis 650° in der zweiten Verdichtungskammer angeordnet ist.

Die Winkelbereiche der Drehwinkel, in denen die zweite Durchgangsöffnung in der ersten und der zweiten Verdichtungskammer temporär angeordnet ist, ist vorteilhaft, da die zweite Durchgangsöffnung so möglichst lange mit der Gegendruckkammer fluidverbunden ist.

Ferner ist bei einem großen Drehwinkel die Verdichtung in den Verdichtungskammern fortgeschritten. Die Gegendruckkammer ist so mit einem größeren Druck als bei einem kleinen Drehwinkel beaufschlagbar. Anders gesagt ist die Durchgangsöffnung erst ab einem Drehwinkel in der ersten bzw. in der zweiten Verdichtungskammer angeordnet, in dem der Druck in den Verdichtungskammern groß genug ist, um einen ausreichenden Druck in der Gegendruckkammer zu erzeugen und die Verdrängerspirale fluiddicht und mit geringen Leistungseinbußen an die Gegenspirale zu pressen.

Es ist bevorzugt, wenn die erste und/oder die zweite Durchgangsöffnung in einem Abschnitt des Bodens der Verdrängerspirale angeordnet ist. Das ist vorteilhaft, da das Passieren der Gegenspirale durch die Durchgangsöffnung so erleichtert wird. Des Weiteren ist so eine gerade und möglichst kurze Verbindung mit der Gegendruckkammer realisierbar.

Es ist vorteilhaft, wenn die erste Durchgangsöffnung einen kleineren Durchmesser aufweist als die zweite Durchgangsöffnung, wobei die Durchmesser einen Betrag zwischen 0,1 mm und 1 mm aufweisen.

Insbesondere ist es vorteilhaft, wenn die erste Durchgangsöffnung einen Durchmesser von 0,3 mm aufweist und/oder die zweite Durchgangsöffnung einen Durchmesser von 0,5 mm aufweist.

Durch die unterschiedlichen Durchmesser sind die erste und die zweite Durchgangsöffnung an die Drücke in den Verdichtungskammern anpassbar. Im radial inneren Bereich der ineinander greifenden Spiralen ist der Verdichtungsgrad und somit der Druck des Arbeitsmediums höher als im radial äußeren Bereich der ineinander greifenden Spiralen. Die erste Durchgangsöffnung ist in einem radial inneren Bereich der Verdrängerspirale mit einem hohen Verdichtungsgrad angeordnet. Die zweite Durchgangsöffnung ist vorzugsweise in einem radial äußeren Bereich mit einem niedrigeren Verdichtungsgrad als im radial inneren Bereich angeordnet. Der Durchmesser der ersten Durchgangsöffnung ist kleiner und drosselt so den Fluidstrom aus dem Bereich mit hohem Verdichtungsgrad bzw. dem Hochdruckbereich in die Gegendruckkammer. Im radial äußeren Bereich ist der Druck geringer und ein größerer Durchmesser der zweiten Durchgangsöffnung daher vorteilhaft, um die Gegendruckkammer mit einem ausreichenden Druck zu beaufschlagen, um die Verdrängerspirale an die Gegenspirale zu pressen.

In einer vorteilhaften Ausführungsform weisen die erste und/oder die zweite Durchgangsöffnung einen kreisförmigen, elliptischen oder eiförmigen Querschnitt auf.

Das ermöglicht verschiedene vorteilhafte Ausführungen der Durchgangsöffnung, welche die Strömungscharakteristik des Arbeitsmediums beeinflussen.

Beispielsweise ist es möglich, dass der Bereich der ersten Durchgangsöffnung, der im Betrieb beim Passieren der Gegenspirale als erstes freigelegt wird, einen größeren Querschnitt aufweist als ein Bereich, der noch von der Gegenspirale verdeckt ist. Dadurch wird bewirkt, dass noch bevor die Durchgangsöffnung vollständig geöffnet ist, eine ausreichende Fluidverbindung mit der Gegendruckkammer gebildet ist.

In einer bevorzugten Ausführungsform weisen die Verdrängerspirale und/oder die Gegenspirale wenigstens abschnittsweise eine Fase auf.

Durch die Fase ist es möglich, den Bereich des Drehwinkels zu verkleinern, den die erste und/oder die zweite Durchgangsöffnung zurücklegt, um die Gegenspirale zu passieren. Die Fase ermöglicht es so, die Zeitspanne zu verkürzen, in der eine Durchgangsöffnung verschlossen ist.

Im Rahmen der Erfindung wird ein Verfahren zum Betreiben einer Verdrängermaschine offenbart und beansprucht, bei dem im Betrieb der Verdrängermaschine die erste Durchgangsöffnung sich mit der in der Gegenspirale zentral angeordneten Auslassöffnung temporär zumindest abschnittsweise überdeckt und eine Fluidverbindung mit der Gegendruckkammer gebildet wird.

Ferner werden im Rahmen der Erfindung eine Fahrzeugklimaanlage und ein Fahrzeug mit einer Fahrzeugklimaanlage offenbart und beansprucht.

Die Erfindung wird im Folgenden anhand von Ausführungsbeispielen unter Bezugnahme auf die beigefügten Zeichnungen näher erläutert.

Darin zeigen:
- Fig. 1: einen Schnitt durch ein erfindungsgemäßes Ausführungsbeispiel einer Verdrängermaschine;
- Fig. 2: einen weiteren Schnitt durch die Verdrängermaschine gemäß Fig. 1;
- Fig. 3: einen schematischen Schnitt einer Gegenspirale und einer Verdrängerspirale eines erfindungsgemäßen Ausführungsbeispiels einer Verdrängermaschine;
- Fig. 4: einen schematischen Schnitt einer Gegenspirale und einer Verdrängerspirale eines erfindungsgemäßen Ausführungsbeispiels einer Verdrängermaschine während eines Verdichtungszyklus bei einem Drehwinkel von 0°;
- Fig. 5: einen schematischen Schnitt der Verdrängermaschine gemäß Fig. 4 bei einem Drehwinkel von 120°;
- Fig. 6: einen schematischen Schnitt der Verdrängermaschine gemäß Fig. 4 bei einem Drehwinkel von 260°;
- Fig. 7: einen schematischen Schnitt der Verdrängermaschine gemäß Fig. 4 bei einem Drehwinkel von 360°;
- Fig. 8: einen schematischen Schnitt der Verdrängermaschine gemäß Fig. 4 bei einem Drehwinkel von 460°;
- Fig. 9: einen schematischen Schnitt der Verdrängermaschine gemäß Fig. 4 bei einem Drehwinkel von 500;
- Fig. 10: einen schematischen Schnitt der Verdrängermaschine gemäß Fig. 4 bei einem Drehwinkel von 600°;
- Fig. 11: einen schematischen Schnitt der Verdrängermaschine gemäß Fig. 4 bei einem Drehwinkel von 720°.

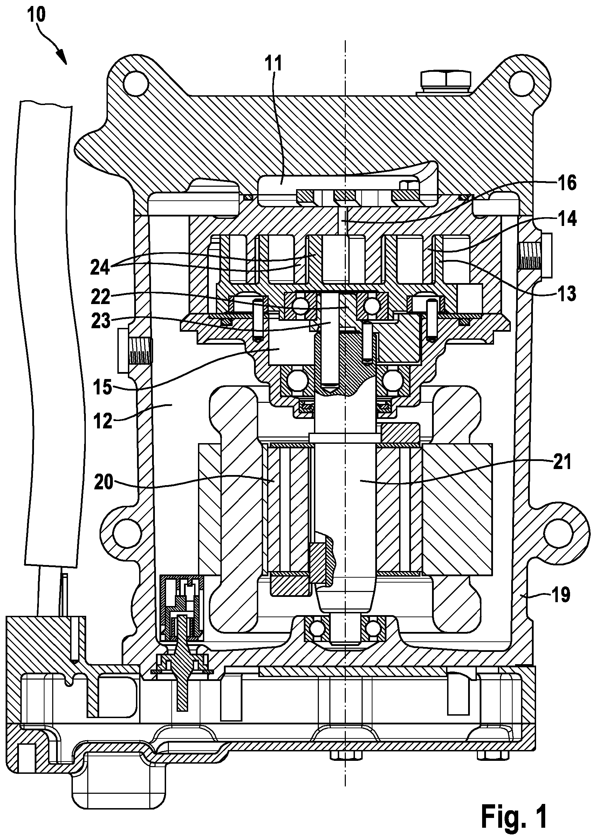

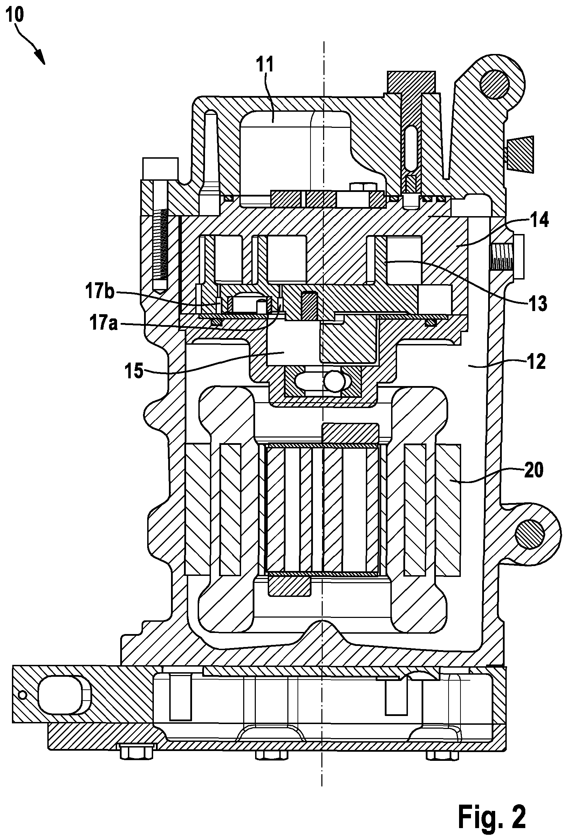

Die Fig. 1 und Fig. 2 zeigen jeweils einen Schnitt durch ein erfindungsgemäßes Ausführungsbeispiel einer Verdrängermaschine 10, wie sie beispielsweise in Fahrzeugklimaanlagen Verwendung findet.

Die Verdrängermaschine 10 umfasst ein Gehäuse 19. Das Gehäuse 19 weist eine zylindrische Form auf. In dem Gehäuse 19 ist ein Antrieb 20 angeordnet. Als Antrieb 20 ist beispielsweise ein Elektromotor oder ein mechanischer Antrieb möglich. Der Antrieb 20 ist mit einer Welle 21 verbunden.

Die Welle 21 erstreckt sich in eine Längsrichtung des Gehäuses 19. An einem axialen Ende der Welle 21 ist ein Exzenterlager 22 mit einem Exzenterstift 23 angeordnet. Durch das Exzenterlager 22 ist die Verdrängerspirale 13 mit der Welle 21 verbunden.

Auf der dem Exzenterlager 22 abgewandten Seite der Verdrängerspirale 13 ist im Gehäuse 19 eine Gegenspirale 14 angeordnet. Die Gegenspirale 14 ist fest und unbeweglich im Gehäuse 19 der Verdrängermaschine 10 angeordnet. Es ist möglich, dass die Gegenspirale 14 mit dem Gehäuse 19 einteilig ausgebildet ist.

Auf der der Verdrängerspirale 13 abgewandten Seite der Gegenspirale 14 ist eine Hochdruckkammer 11 angeordnet.

In der Gegenspirale 14 ist zentral eine Auslassöffnung 16 angeordnet. Die Auslassöffnung 16 erstreckt sich zwischen der Hochdruckkammer und der der Verdrängerspirale 13 zugewandten Seite der Gegenspirale 14.

Auf der der Gegenspirale 14 abgewandten Seite der Verdrängerspirale 13 ist eine Niederdruckkammer 12 angeordnet. Zwischen der Niederdruckkammer 12 und der Verdrängerspirale 13 ist eine Gegendruckkammer 15 angeordnet.

Die Verdrängerspirale 13 ist in einer Richtung parallel zur Längsrichtung der Welle 21 beweglich im Gehäuse 19 angeordnet. Mit anderen Worten ist die Verdrängerspirale 13 in Richtung der Gegenspirale 14 und von der Gegenspirale 14 weg verschiebbar. In Fig. 2 ist erkennbar, dass im Boden der Verdrängerspirale 13 eine erste und eine zweite Durchgangsöffnung 17a, 17b angeordnet sind.

Die erste Durchgangsöffnung 17a ist in einem radial inneren Bereich der Verdrängerspirale 13 angeordnet. Die zweite Durchgangsöffnung 17b ist in einem radial äußeren Bereich der Verdrängerspirale 13 angeordnet. Die erste und zweite Durchgangsöffnung 17a, 17b erstrecken sich orthogonal zur Oberfläche des Bodens. Die Durchgangsöffnungen 17a, 17b erstrecken sich im eingebauten Zustand zwischen einer der Gegenspirale 14 zugewandten Seite des Bodens und einer der Gegenspirale 14 abgewandten Seite des Bodens.

Die Durchgangsöffnungen 17a, 17b weisen auf beiden Seiten des Bodens jeweils eine Öffnung auf, welche die beiden Seiten des Bodens miteinander verbinden. Anders gesagt bilden die Durchgangsöffnungen 17 einen Durchgang zwischen den beiden Seiten des Bodens der Verdrängerspirale 13. Die Durchgangsöffnungen 17a, 17b bilden eine Fluidverbindung mit der Gegendruckkammer 15.

Die Durchgangsöffnungen 17a, 17b weisen einen kreisförmigen Querschnitt auf. Andere Formen, beispielsweise elliptische, eiförmige oder polygonale Formen sind möglich. Die Durchgangsöffnungen 17a, 17b weisen vorzugsweise eine Bohrung auf. Die Durchmesser der Durchgangsöffnungen 17a, 17b betragen vorzugsweise zwischen 0,1 mm bis 1 mm. Insbesondere beträgt der Durchmesser der ersten Durchgangsöffnung 17a 0,3 mm und der Durchmesser der zweiten Durchgangsöffnung 17b 0,5 mm.

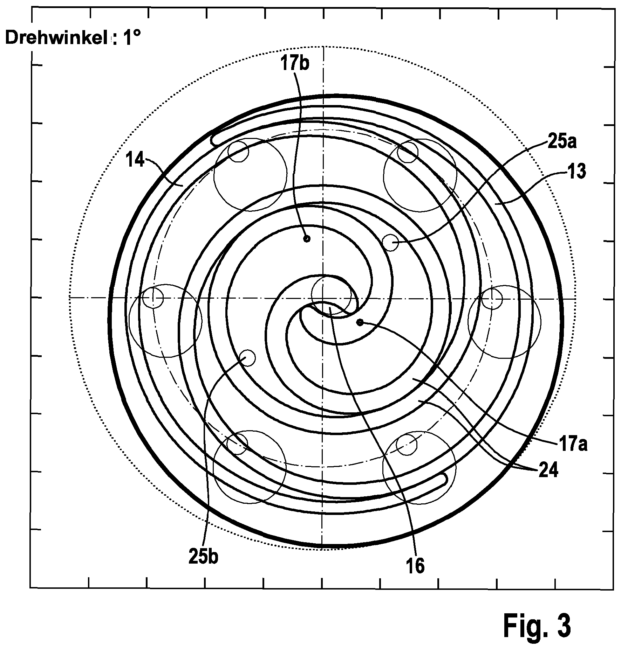

Fig. 3 zeigt eine schematische Ansicht einer Verdrängerspirale 13 und einer Gegenspirale 14, wie sie in einer Verdrängermaschine 10 gemäß Fig. 1 und Fig. 2 verwendet werden können.

Die Verdrängerspirale 13 und die Gegenspirale 14 weisen jeweils Spiralenabschnitte 24 und einen Boden auf. Die Spiralenabschnitte 24 sind jeweils orthogonal auf dem Boden der Verdrängerspirale 13 und der Gegenspirale 14 angeordnet. Die Spiralenabschnitte 24 weisen eine spiralfömige oder schneckenförmige Geometrie auf. Im eingebauten Zustand erstrecken sich die Spiralenabschnitte 24 der Verdrängerspirale 13 in Richtung der Gegenspirale 14 und die Spiralenabschnitte 24 der Gegenspirale 14 in Richtung der Verdrängerspirale 13. Die Spiralenabschnitte 24 der Verdrängerspirale 13 und der Gegenspirale 14 stehen miteinander in Eingriff. Im Betrieb stehen die Spiralenabschnitte 24 jeweils mit dem Boden der gegenüberliegenden Spirale 13, 14 in Kontakt.

Durch die ineinander greifenden Spiralen 13, 14 sind Verdichtungskammern 18a, 18b gebildet. Anders gesagt sind die Verdichtungskammern 18a, 18b von den Spiralenabschnitten 24 der Verdrängerspirale 13 und der Gegenspirale 14 begrenzt.

Die Auslassöffnung 16 ist zentral und außermittig in der Gegenspirale 14 angeordnet. Neben der Auslassöffnung 16 sind zwei sekundäre Auslassöffnungen 25a, 25b in der Gegenspirale 14 angeordnet. Die sekundären Auslassöffnungen 25a, 25b können auch als Vorauslässe bezeichnet werden. Die sekundären Auslassöffnungen 25a, 25b sind radial von dem Zentrum der Gegenspirale 14 beabstandet.

Im radial inneren Bereich der beiden ineinandergreifenden Spiralen 13, 14 ist eine innere Verdichtungskammer 26 angeordnet. Mit Blick auf die Auslassöffnung ist somit unter dem Ausdruck "zentral bzw. mittig angeordnet" zu verstehen, dass die Auslassöffnung die innere Verdichtungskammer 26, die von der Verdrängerspirale 13 und der Gegenspirale 14 begrenzt ist, wenigstens abschnittsweise temporär überschneidet.

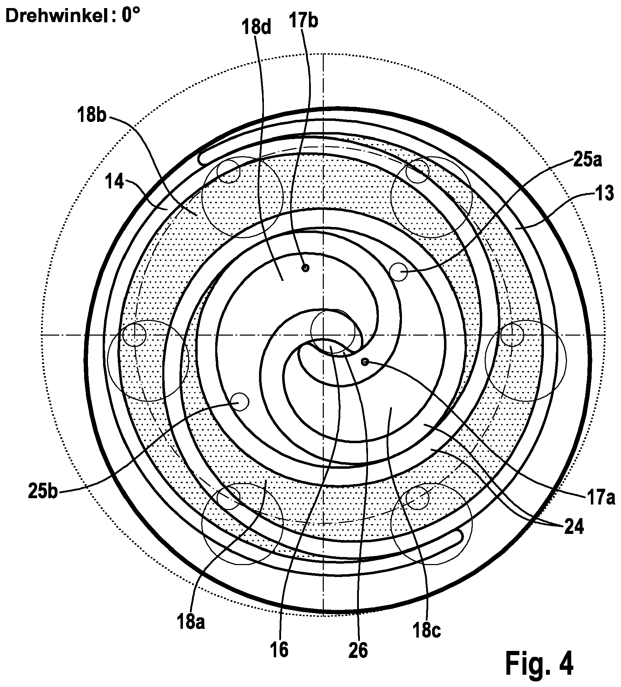

In Fig. 4 bis Fig. 11 sind verschiedene Zustände eines Verdichtungszyklus einer Verdrängermaschine 10 schematisch dargestellt. Im nachfolgenden sind die Relativpositionen der Verdrängerspirale 13 und der Gegenspirale 14 zueinander als Momentaufnahmen mit Blick auf die Geometrie der jeweiligen Bauteile sowie deren Funktion bzw. Wirkung beschrieben. Die in den Figuren 4 bis 11 dargestellt Spiralenanordnungen entsprechen konstruktiv im Wesentlichen der in Fig. 3 dargestellten Spiralenanordnung.

Unter dem Verdichtungszyklus ist ein Durchlauf bzw. eine Periode des kontinuierlich wiederkehrenden Verdichtungsprozesses zu verstehen.

Die Position der Verdrängerspirale 13 während eines Verdichtungszyklus ist durch den Drehwinkel der orbitierenden Bewegung darstellbar. Der Drehwinkel der Verdrängerspirale 13 in Fig. 4 beträgt 0°.

In Fig. 4 sind im radial äußeren Bereich die erste und zweite Verdichtungskammer 18a, 18b gebildet. Die beiden Verdichtungskammern 18a, 18b sind geschlossen.

Eine Verdichtungskammer 18 ist geschlossen, wenn die Verdichtungskammer 18 fluiddicht von den Spiralenabschnitten 24 der Verdrängerspirale 13 und der Gegenspirale 14 umschlossen ist.

Im radial inneren Bereich der Spiralen 13, 14 sind jeweils eine weitere erste und zweite Verdichtungskammer 18c, 18d angeordnet. Die Verdichtungskammern 18c, 18d weisen jeweils ein kleineres relatives Volumen auf als die Verdichtungskammern 18a, 18b.

Unter dem relativen Volumen der Verdichtungskammern 18 ist das veränderliche Volumen der Verdichtungskammern 18 zu einem bestimmen Zeitpunkt während dem Verdichtungszyklus der Verdrängermaschine 10 in Relation zum Anfangsvolumen der Verdichtungskammern 18 bei einem Drehwinkel von 0° zu verstehen.

Die erste Durchgangsöffnung 17a ist von einem Spiralenabschnitt 24 der Gegenspirale 14 verdeckt. Die zweite Durchgangsöffnung 17b ist in der zweiten Verdichtungskammer 18d angeordnet. Die erste Durchgangsöffnung 17a ist folglich geschlossen und die zweite Durchgangsöffnung 17b offen. Dadurch ist eine Fluidverbindung zwischen der zweiten Verdichtungskammer 18d und der Gegendruckkammer 15 vorhanden und die Verdrängerspirale 13 ist an die Gegenspirale 14 angepresst.

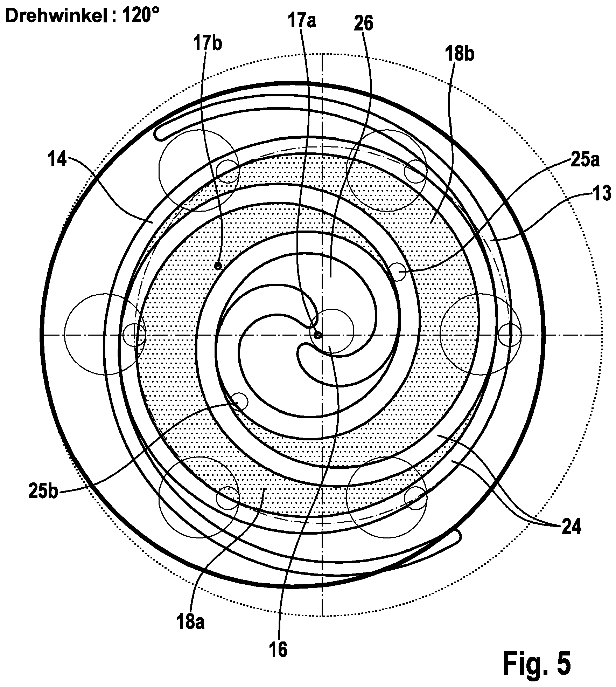

In Fig. 5 ist eine Momentaufnahme bei einem Drehwinkel von 120° dargestellt. Die Verdichtungskammern 18a, 18b sind radial nach innen gewandert. Die relativen Volumina der Verdichtungskammern 18a, 18b haben sich verkleinert.

Die relativen Volumina der Verdichtungskammern 18a, 18b verringern sich mit zunehmendem Drehwinkel. Durch das Verkleinern der relativen Volumina steigt der Druck in den Verdichtungskammern 18a, 18b.

Die Verdichtungskammern 18c, 18d haben sich zu einer inneren Verdichtungskammer 26 vereinigt. Die innere Verdichtungskammer 26 entspricht vorzugsweise dem Hochdruckbereich, in dem die erste Durchgangsöffnung 17a angeordnet ist.

Die erste Durchgangsöffnung 17a ist in der inneren Verdichtungskammer 26 bzw. dem Hochdruckbereich angeordnet. Die erste Durchgangsöffnung 17a überschneidet sich mit der Auslassöffnung 16. Die zweite Durchgangsöffnung 17b ist in der ersten Verdichtungskammer 18a angeordnet. Beide Durchgangsöffnungen 17a, 17b sind daher offen und ermöglichen so eine Fluidverbindung mit der Gegendruckkammer 15.

Unter dem Begriff "überschneiden" ist zu verstehen, dass die beiden Öffnungen 17a, 16 wenigstens abschnittsweise übereinander angeordnet sind. Die erste Durchgangsöffnung 17a weist einen Abstand zur Auslassöffnung 16 in Richtung der Gegenspirale 14 auf. Anders gesagt überdeckt, überstreicht und/oder überquert die Durchgangsöffnung 17a die Auslassöffnung 16 wenigstens abschnittsweise.

Das abschnittsweise Überschneiden der ersten Durchgangsöffnung 17a bewirkt, dass in der Gegendruckkammer 15 ein möglichst hoher Druck einstellbar ist. Des Weiteren wird dadurch erreicht, dass die Gegendruckkammer 15 für eine möglichst lange Zeitspanne bzw. für einen großen Drehwinkelbereich mit dem Hochdruckbereich fluidverbunden ist.

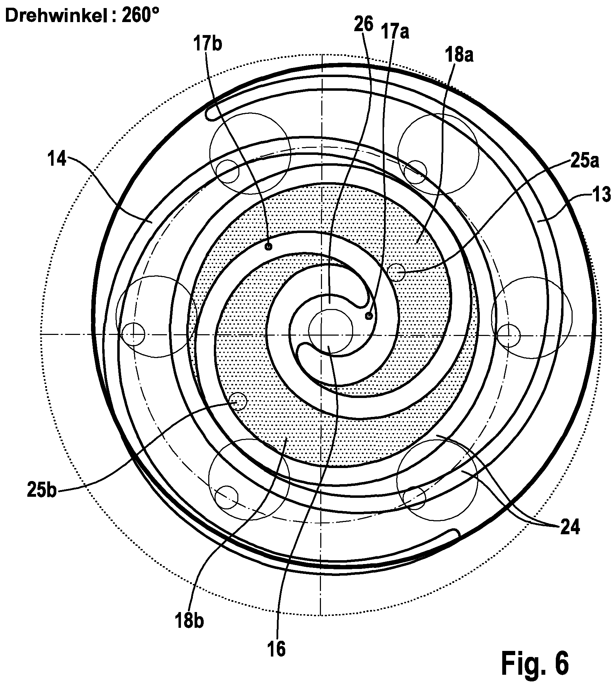

Fig. 6 zeigt eine Darstellung des Verdichtungszyklus bei einem Drehwinkel von 260 °.

Die erste und zweite Verdichtungskammer 18a, 18b sind weiter nach radial innen gewandert. Das relativen Volumina der inneren Verdichtungskammer 26 und der ersten und zweiten Verdichtungskammern 18a, 18b haben sich verkleinert. Der Druck in den Verdichtungskammern 18a, 18b hat sich somit weiter erhöht.

Die erste Durchgangsöffnung 17a ist weiterhin in der inneren Verdichtungskammer 26 angeordnet. Die erste Durchgangsöffnung 17a überdeckt sich nicht mehr mit der Auslassöffnung 16. Die zweite Durchgangsöffnung 17b ist von einem Spiralenabschnitt 24 der Gegenspirale 14 verdeckt. Der Druck in der Gegendruckkammer 15 resultiert in Fig. 6 durch die Fluidverbindung der ersten Durchgangsöffnung 17a mit der inneren Verdichtungskammer.

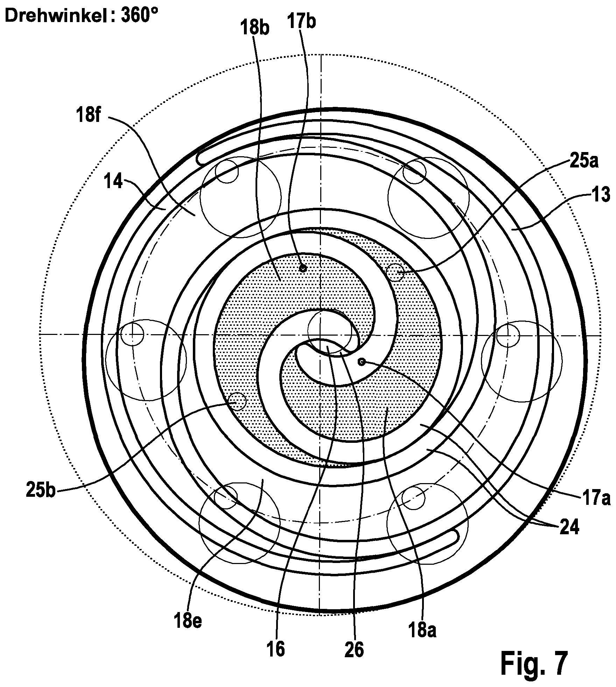

In Fig. 7 ist eine Momentaufnahme des Verdichtungszyklus bei einem Drehwinkel von 360° gezeigt.

Im radial äußeren Bereich der Verdrängerspirale 13 und der Gegenspirale 14 haben sich zwei neue Verdichtungskammern 18e, 18f gebildet.

Die erste und zweite Verdichtungskammer 18a, 18b sind weiter in Richtung des Zentrums bzw. der Auslassöffnung 16 gewandert. Das relative Volumen der inneren Verdichtungskammer 26 hat sich weiter verkleinert. Die Auslassöffnung 16 ist abschnittsweise in der inneren Verdichtungskammer 26 angeordnet. Mit anderen Worten ist die Querschnittsfläche der inneren Verdichtungskammer 26 kleiner als die Querschnittsfläche der Auslassöffnung 16.

Die erste Durchgangsöffnung 17a ist von einem Spiralenabschnitt 24 der Gegenspirale 14 verdeckt und somit geschlossen. Die zweite Durchgangsöffnung 17b ist nach dem Passieren des Spiralenabschnitts 24 in der zweiten Verdichtungskammer 18b angeordnet und offen.

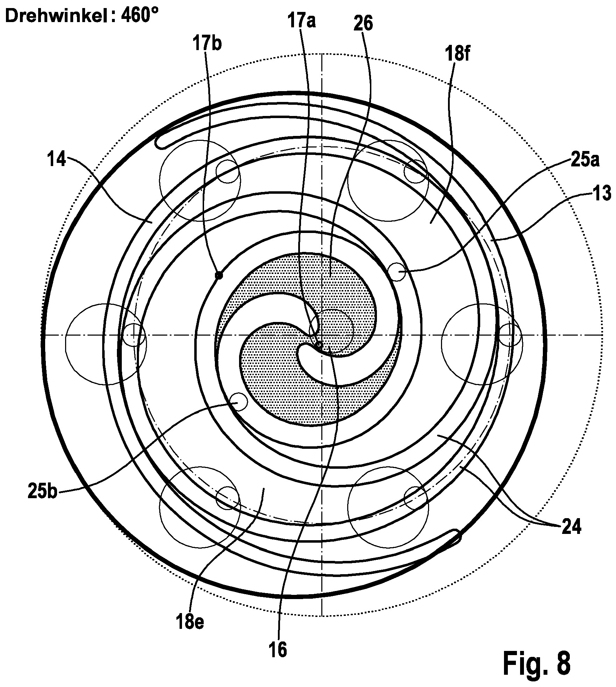

In Fig. 8 ist ein Verdichtungsprozess bei einem Drehwinkel von 460° dargestellt.

Die Verdichtungskammern 18e, 18f sind weiter in Richtung des Auslasses 16 gewandert. Die relativen Volumina der Verdichtungskammern 18e, 18f haben sich weiter verkleinert.

Die innere Verdichtungskammer 26, die durch das Vereinigen der ersten und zweiten Verdichtungskammer 18c, 18d entstanden ist, hat sich aufgelöst. Die erste und zweite Verdichtungskammern 18a, 18b haben sich zu einer neuen inneren Verdichtungskammer 26 vereinigt.

Die erste Durchgangsöffnung 17a ist in der inneren Verdichtungskammer 26 angeordnet. Die erste Durchgangsöffnung 17a überdeckt sich mit der Auslassöffnung 16. Die zweite Durchgangsöffnung 17b ist abschnittsweise von dem Spiralenabschnitt 24 der Gegenspirale 14 verdeckt, der sich zwischen der ersten Verdichtungskammer 18c und der innere Verdichtungskammer 26 erstreckt. Die zweite Durchgangsöffnung 17b ist abschnittsweise geöffnet.

Die erste Durchgangsöffnung 17a bewirkt eine Fluidverbindung mit dem Hochdruckbereich bzw. der inneren Verdichtungskammer 26 und der Gegendruckkammer 15. Das wirkt sich hier vorteilhaft auf den Druck in der Gegendruckkammer 15 aus, da die zweite Durchgangsöffnung 17b noch nicht vollständig, sondern erst lediglich abschnittsweise geöffnet ist und daher ohne die erste Durchgangsöffnung 17a zu diesem Zeitpunkt im Verdichtungszyklus ein niedriger Druck eingestellt wäre.

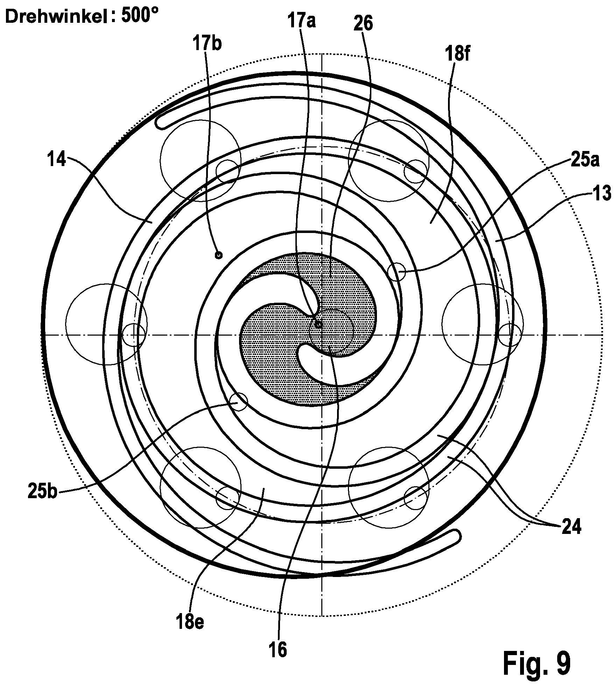

Fig. 9 zeigt eine Momentaufnahme des Verdichtungszyklus bei 500°.

Die relativen Volumina der Verdichtungskammern 18e, 18f und der inneren Verdichtungskammer 26 haben sich weiter verkleinert.

Die Auslassöffnung 16 ist vollständig in der inneren Verdichtungskammer 26 angeordnet. Die erste Durchgangsöffnung 17a ist weiterhin in der inneren Verdichtungskammer 26 angeordnet und überdeckt sich mit der Auslassöffnung 16. Die zweite Durchgangsöffnung 17b ist nicht mehr teilweise, sondern vollständig in der ersten Verdichtungskammer 18e angeordnet. Beide Durchgangsöffnungen 17a, 17b sind geöffnet und mit der Gegendruckkammer 15 fluidverbunden.

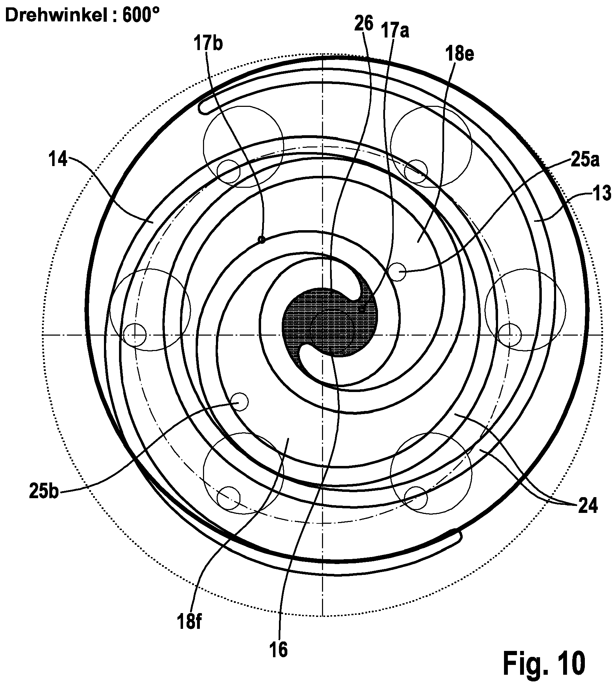

In Fig. 10, bei einem Drehwinkel von 600°, ist die Auslassöffnung 16 weiterhin in der inneren Verdichtungskammer 26 angeordnet. Die erste Durchgangsöffnung 17a überdeckt die Auslassöffnung 16 nicht.

Die zweite Durchgangsöffnung 17b ist in der ersten Verdichtungskammer 18e angeordnet. Die zweite Durchgangsöffnung 17b liegt tangential an einem Spiralenabschnitt 24 an.

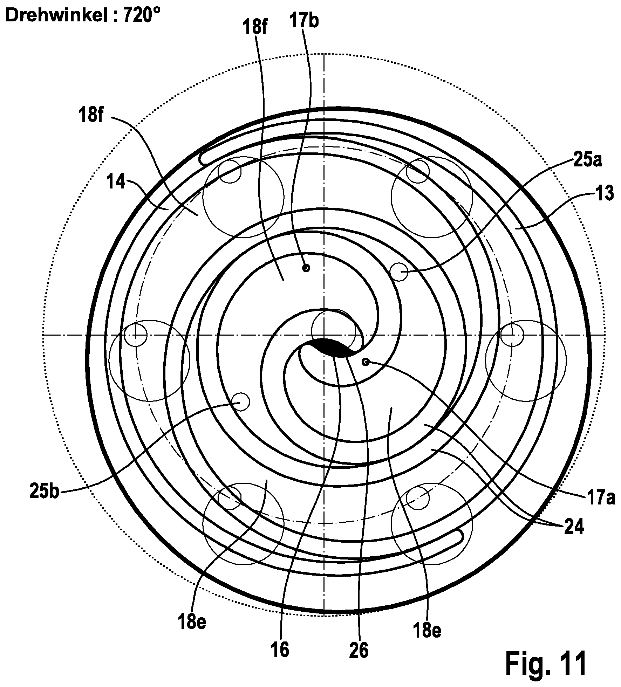

Fig. 11 zeigt einen Zustand des Verdichtungszyklus, der im Wesentlichen dem Zustand bei einem Drehwinkel von 360° (vgl. Fig. 7) entspricht, wobei die innere Verdichtungskammer 26 in Fig. 11 im Gegensatz zum in Fig. 7 dargestellten Zustand aus den Verdichtungskammern 18a, 18b entstanden ist.

Die Welle 21 ist mit dem Antrieb 20 wirkverbunden. Im Betrieb bewirkt die Rotation der Welle 21 und die exzentrische Verbindung der Verdrängerspirale 13 mit der Welle 21 eine orbitierende Bewegung der Verdrängerspirale 13.

Das Arbeitsmedium, beispielsweise ein Kühlmittel, wird zu Beginn eines Verdichtungszyklus in einem radial äußeren Bereich der Spiralen 13, 14 aus der Niederdruckkammer 12 angesaugt. Das Arbeitsmedium wird in den Verdichtungskammern 18 zwischen der Verdrängerspirale 13 und der Gegenspirale 14 transportiert. Durch die orbitierende Bewegung der Verdrängerspirale 13 verringern sich die relativen Volumina der Verdichtungskammern 18, um das Arbeitsmedium zu verdichten.

Die Verdichtungskammern 18 lösen sich im Verlauf des Verdichtungszyklus auf. Mit anderen Worten sind die Verdichtungskammern 18 temporär. Die Verdichtungskammern 18 bilden sich im Betrieb kontinuierlich im äußeren radialen Bereich der Spiralenanordnung immer wieder neu und wandern anschließend ins radial Innere der Spiralenanordnung. Der Bewegungspfad der Verdichtungskammern 18 ist spiralförmig. Im radial Inneren der Spiralen 13, 14 vereinigen sich die erste und zweite Verdichtungskammer 18a, 18b zunächst zu einer inneren Verdichtungskammer 26. Das relative Volumen der inneren Verdichtungskammer 26 verringert sich weiter, bis sich die innere Verdichtungskammer 26 auflöst. Unmittelbar darauffolgend bildet sich eine neue innere Verdichtungskammer 26 durch zwei nachfolgende erste und zweite Verdichtungskammern 18c, 18d.

Aus der inneren Verdichtungskammer 26 strömt das verdichtete Arbeitsmedium durch die Auslassöffnung 16 in die Hochdruckkammer 11.

In dem Ausführungsbeispiel, das in Fig. 4 bis 11 dargestellt ist, sind bis zu fünf Verdichtungskammern 18, 26 möglich. Dabei handelt es sich um jeweils zwei Paare mit ersten und zweiten Verdichtungskammern 18a, 18b und eine innere Verdichtungskammer 26. Es sind ferner Konfigurationen möglich, die mehr oder weniger Verdichtungskammern 18, 26 umfassen.

Die Durchgangsöffnungen 17a, 17b bewegen sich auf Grund der orbitierenden Bewegung der Verdrängerspirale 13 auf einer Kreisbahn. Die Durchgangsöffnungen 17a, 17b ermöglichen es, die Verdichtungskammern 18, 26 im Betrieb mit der Gegendruckkammer 15 fluidleitend zu verbinden, um die Verdrängerspirale 13 mit einem ausreichenden Druck zu beaufschlagen und so an die Gegenspirale 14 anzupressen.

In einem Verdichtungszyklus bildet die Durchgangsöffnung 17a in einem Winkelbereich des Drehwinkels zwischen 435° bis 650° eine Fluidverbindung zwischen der inneren Verdichtungskammer 26 und der Gegendruckkammer 15. In einem Verdichtungszyklus ist die zweite Durchgangsöffnung 17b vorzugsweise in den folgenden Winkelbereichen offen. In dem Winkelbereich des Drehwinkels von 95° bis 250° bildet die zweite Durchgangsöffnung 17b eine Fluidverbindung mit der ersten Verdichtungskammer 18a und der Gegendruckkammer 15. In dem Winkelbereich zwischen 285° bis 650° ist die zweite Durchgangsöffnung 17b in der zweiten Verdichtungskammer 18b angeordnet. In dem Winkelbereich des Drehwinkels zwischen 250° und 285° ist die zweite Durchgangsöffnung 17b von einem Spiralenabschnitt 24 der Gegenspirale 14 verdeckt. Es ist vorzuziehen jedoch nicht zwingend, dass die erste Durchgangsöffnung 17a offen ist, wenn die zweite Durchgangsöffnung 17b von einer Gegenspirale verdeckt ist und umgekehrt. In der in den Fig. 6 gezeigten Momentaufnahme bei einem Drehwinkel von 260° ist die zweite Durchgangsöffnung 17b geschlossen. Der vorangegangene Verdichtungszyklus ist noch nicht abgeschlossen. Die Position des Drehwinkel des vorangegangenen Verdichtungszyklus entspricht in Fig. 6 in etwa 620°. Daher ist die erste Durchgangsöffnung 17a in der inneren Verdichtungskammer 26 angeordnet und ermöglicht so eine Fluidverbindung mit der Gegendruckkammer 15.

Die zweite Durchgangsöffnung 17b ist im Betrieb der Verdrängermaschine 10 zunächst in der ersten Verdichtungskammer 18a und anschließend in der zweiten Verdichtungskammer 18b eines Verdichtungszyklus angeordnet. Die zweite Durchgangsöffnung 17b ist pro Verdichtungszyklus jeweils einmal in einer der Verdichtungskammern 18a, 18b angeordnet. Nach der zweiten Verdichtungskammer 18b wandert die zweite Durchgangsöffnung 17b zur ersten Verdichtungskammer 18c, des darauffolgenden Verdichtungszyklus.

Durch die Durchgangsöffnungen 17a, 17b strömt ein Teil des Arbeitsmediums in die Gegendruckkammer 15. Dadurch erhöht sich der Druck in der Gegendruckkammer 15. Durch den Druck wird die Verdrängerspirale 13 mit einer Kraft in axialer Richtung beaufschlagt. Die Kraft wirkt in Richtung der Gegenspirale 14. Da die Verdrängerspirale 13 in axialer Richtung beweglich ist, wird diese an die Gegenspirale 14 angepresst. Das Anpressen der Verdrängerspirale 13 an die Gegenspirale 14 bewirkt ein Verdichten des Arbeitsmediums mit möglichst geringen Leistungseinbußen.

In dem in den Figuren 4 bis 11 dargestellten Ausführungsbeispiel finden mehrere Verdichtungszyklen gleichzeitig zeitversetzt statt. Die erste und zweite Verdichtungskammer 18a, 18b und die erste und zweite Verdichtungskammer 18c, 18d sind unterschiedlichen Verdichtungszyklen zugeordnet. Mit anderen Worten umfasst jeder Verdichtungszyklus ein Paar einer ersten und zweiten Verdichtungskammer 18a, 18b.

### Bezugszeichenliste

- 10: Verdrängermaschine
- 11: Hochdruckkammer
- 12: Niederdruckkammer
- 13: Verdrängerspirale
- 14: Gegenspirale
- 15: Gegendruckkammer
- 16: Auslassöffnung
- 17a: erste Durchgangsöffnung
- 17b: zweite Durchgangsöffnung
- 18a: erste Verdichtungskammer
- 18b: zweite Verdichtungskammer
- 18c: erste Verdichtungskammer
- 18d: zweite Verdichtungskammer
- 18e: erste Verdichtungskammer
- 18f: zweite Verdichtungskammer
- 19: Gehäuse
- 20: Antrieb
- 21: Welle
- 22: Exzenterlager
- 23: Exzenterstift
- 24: Spiralenabschnitte
- 25a: sekundäre Auslassöffnung
- 25b: sekundäre Auslassöffnung
- 26: innere Verdichtungskammer

## Patentansprüche

1. Verdrängermaschine nach dem Spiralprinzip, insbesondere Scrollverdichter, mit einer Hochdruckkammer (11), einer Niederdruckkammer (12), einer orbitierenden Verdrängerspirale (13), einer Gegenspirale (14) und einer Gegendruckkammer (15), die zwischen der Niederdruckkammer (12) und der Verdrängerspirale (13) angeordnet ist, wobei in der Gegenspirale (14) in einem Hochdruckbereich eine Auslassöffnung (16) angeordnet ist, durch die im Betrieb ein verdichtetes Arbeitsmedium in die Hochdruckkammer (11) strömt, und wobei die Verdrängerspirale (13) wenigstens eine erste und eine zweite Durchgangsöffnung (17a, 17b) zur Fluidverbindung mit der Gegendruckkammer (15) aufweist,
**dadurch gekennzeichnet, dass**
wenigstens die erste Durchgangsöffnung (17a) im Bereich der Auslassöffnung (16) angeordnet ist, so dass sich im Betrieb die erste Durchgangsöffnung (17a) und die Auslassöffnung (16) temporär zumindest abschnittsweise überdecken, wobei die erste Durchgangsöffnung (17a) in einem Winkelbereich des Drehwinkels der orbitierenden Verdrängerspirale (13) von 435° bis 650° mit der Gegendruckkammer (15) fluidleitend verbunden ist.

2. Verdrängermaschine nach Anspruch 1,
**dadurch gekennzeichnet, dass**
die zweite Durchgangsöffnung (17b) in einem Bereich der Verdrängerspirale (13) angeordnet ist, der im Betrieb einen geringeren Druck als der Druck im Hochdruckbereich aufweist.

3. Verdrängermaschine nach einem der vorhergehenden Ansprüche,
**dadurch gekennzeichnet, dass**
die erste Durchgangsöffnung (17a) eine temporäre Überdeckung mit der Auslassöffnung (16) zwischen 1% und 100%, insbesondere zwischen 10% und 90%, insbesondere zwischen 20% und 80%, insbesondere zwischen 30% und 70%, insbesondere zwischen 40% und 60%, aufweist.

4. Verdrängermaschine nach einem der vorhergehenden Ansprüche,
**dadurch gekennzeichnet, dass**
im Betrieb temporär wenigstens eine erste und eine zweite Verdichtungskammer (18a, 18b) zur Aufnahme eines Arbeitsmediums gebildet sind und die zweite Durchgangsöffnung (17b) in der Verdrängerspirale (13) angeordnet ist, so dass im Betrieb durch die orbitierende Bewegung der Verdrängerspirale (13) die zweite Durchgangsöffnung (17b) temporär zumindest abschnittsweise in der ersten Verdichtungskammer (18a) und anschließend temporär zumindest abschnittsweise in der zweiten Verdichtungskammer (18b) angeordnet ist.

5. Verdrängermaschine nach Anspruch 4;
**dadurch gekennzeichnet, dass**
die zweite Durchgangsöffnung (17b) in einem Winkelbereich des Drehwinkels der orbitierenden Verdrängerspirale (13) von 95° bis 250° in der ersten Verdichtungskammer (18a) angeordnet ist und in einem Winkelbereich von 285° bis 650° in der zweiten Verdichtungskammer (18b) angeordnet ist.

6. Verdrängermaschine nach einem der vorhergehenden Ansprüche,
**dadurch gekennzeichnet, dass**
die erste und/oder die zweite Durchgangsöffnung (17a, 17b) in einem Abschnitt des Bodens der Verdrängerspirale (13) angeordnet ist.

7. Verdrängermaschine nach einem der vorhergehenden Ansprüche,
**dadurch gekennzeichnet, dass**
die erste und/oder die zweite Durchgangsöffnung (17a, 17b) einen kreisförmigen, elliptischen oder eiförmigen Querschnitt aufweist.

8. Verdrängermaschine nach einem der vorhergehenden Ansprüche,
**dadurch gekennzeichnet, dass**
die erste Durchgangsöffnung (17a) einen kleineren Durchmesser aufweist als die zweite Durchgangsöffnung (17b), wobei die Durchmesser einen Betrag zwischen 0,1 mm und 1 mm aufweisen.

9. Verdrängermaschine nach einem der vorhergehenden Ansprüche,
**dadurch gekennzeichnet, dass**
die erste Durchgangsöffnung (17a) einen Durchmesser von 0,3 mm aufweist und/oder die zweite Durchgangsöffnung (17b) einen Durchmesser von 0,5 mm aufweist.

10. Verdrängermaschine nach einem der vorhergehenden Ansprüche,
**dadurch gekennzeichnet, dass**
die Verdrängerspirale (13) und/oder die Gegenspirale (14) wenigstens abschnittsweise eine Fase aufweisen.

11. Verfahren zum Betreiben einer Verdrängermaschine nach dem Spiralprinzip, insbesondere Scrollverdichter, mit einer Hochdruckkammer (11), einer Niederdruckkammer (12), einer orbitierenden Verdrängerspirale (13), einer Gegenspirale (14) und einer Gegendruckkammer (15), die zwischen der Niederdruckkammer (12) und der Verdrängerspirale (13) angeordnet ist, wobei in der Gegenspirale (14) in einem Hochdruckbereich eine Auslassöffnung (16) angeordnet ist, wobei die Verdrängerspirale (13) wenigstens eine erste und eine zweite Durchgangsöffnung (17a, 17b) zur Fluidverbindung mit der Gegendruckkammer (15) aufweist und die erste Durchgangsöffnung (17a) im Bereich der Auslassöffnung (16) angeordnet ist,
bei dem im Betrieb der Verdrängermaschine (10)
ein verdichtetes Arbeitsmedium in die Hochdruckkammer (11) strömt,
**dadurch gekennzeichnet, dass**
die erste Durchgangsöffnung (17a) sich mit der in der Gegenspirale (14) zentral angeordneten Auslassöffnung (16) temporär zumindest abschnittsweise überdeckt und eine Fluidverbindung mit der Gegendruckkammer (15) gebildet wird, und dass
die erste Durchgangsöffnung (17a) in einem Winkelbereich des Drehwinkels der orbitierenden Verdrängerspirale (13) von 435° bis 650° mit der Gegendruckkammer (15) fluidleitend verbunden ist.

12. Fahrzeugklimaanlage mit einer Verdrängermaschine, insbesondere mit einem Scrollverdichter, nach einem der Ansprüche 1 bis 10.

13. Fahrzeug mit einer Verdrängermaschine nach einem der Ansprüche 1 bis 10 oder einer Fahrzeugklimaanlage nach Anspruch 12.

## Claims

1. A positive displacement machine according to the spiral principle, in particular a scroll compressor, comprising a high-pressure chamber (11), a low-pressure chamber (12), an orbiting positive displacement spiral (13), a counter-spiral (14) and a counter-pressure chamber (15), which is arranged between the low-pressure chamber (12) and the positive displacement spiral (13), wherein an outlet opening (16) is arranged in the counter-spiral (14) in a high-pressure area, via which a compressed working medium flows into the high-pressure chamber (11) during operation, and wherein the displacement spiral (13) comprises at least a first and a second passage opening (17a, 17b) for the fluid connection with the counter-pressure chamber (15),
**characterized in that**
at least the first passage opening (17a) is arranged in the area of the outlet opening (16) so that, during operation, the first passage opening (17a) and the outlet opening (16) temporarily overlap each other at least in sections, wherein the first passage opening (17a) is connected to the counter-pressure chamber (15) in a fluid-conducting manner at an angular range of the angle of rotation of the orbiting positive displacement spiral (13) of 435° to 650°.

2. The positive displacement machine according to claim 1,
**characterized in that**
the second passage opening (17b) is arranged in an area of the positive displacement spiral (13) which comprises a lower pressure during operation than the pressure in the high-pressure range.

3. The positive displacement machine according to any one of the preceding claims,
**characterized in that**
the first passage opening (17a) comprises a temporary overlap with the outlet opening (16) between 1% and 100%, in particular between 10% and 90%, in particular between 20% and 80%, in particular between 30% and 70%, in particular between 40% and 60%.

4. The positive displacement machine according to any one of the preceding claims,
**characterized in that**, during operation, at least one first and one second compression chamber (18a, 18b) are temporarily formed to receive a working medium, and the second passage opening (17b) is arranged in the positive displacement spiral (13) so that, during operation, due to the orbiting movement of the positive displacement spiral (13), the second passage opening (17b) is temporarily arranged in the first compression chamber (18a) at least in sections and subsequently temporarily arranged in the second compression chamber (18b) at least in sections.

5. The positive displacement machine according to claim 4,
**characterized in that**
the second passage opening (17b) is arranged at an angular range of the angle of rotation of the orbiting positive displacement spiral (13) of 95° to 250° in the first compression chamber (18a) and is arranged at an angular range of 285° to 650° in the second compression chamber (18b).

6. The positive displacement machine according to any one of the preceding claims,
**characterized in that**
the first and/or second passage opening (17a, 17b) is arranged in a section of the bottom of the positive displacement spiral (13).

7. The positive displacement machine according to any one of the preceding claims,
**characterized in that**
the first and/or second passage opening (17a, 17b) comprises a circular, elliptical or oval cross-section.

8. The positive displacement machine according to any one of the preceding claims,
**characterized in that**
the first passage opening (17a) comprises a smaller diameter than the second passage opening (17b), wherein the diameters comprise an absolute length between 0.1 mm and 1 mm.

9. The positive displacement machine according to any one of the preceding claims,
**characterized in that**
the first passage opening (17a) comprises a diameter of 0.3 mm and/or the second passage opening (17b) comprises a diameter of 0.5 mm.

10. The positive displacement machine according to any one of the preceding claims,
**characterized in that**
the positive displacement spiral (13) and/or the counter-spiral (14) have a chamfer at least in sections.

11. Method for operating a positive displacement machine according to the spiral principle, in particular scroll compressors, comprising a high-pressure chamber (11), a low-pressure chamber (12), an orbiting positive displacement spiral (13), a counter-spiral (14) and a counter-pressure chamber (15), which is arranged between the low-pressure chamber (12) and the positive displacement spiral (13), wherein an outlet opening (16) is arranged in the counter-spiral (14) in a high-pressure area, wherein the displacement spiral (13) comprises at least a first and a second passage opening (17a, 17b) for the fluid connection with the counter-pressure chamber (15), and the first passage opening (17a) is arranged in the area of the outlet opening (16), where a compressed working medium flows into the high-pressure chamber (11) during operation of the positive displacement machine (10),
**characterized in that**
the first passage opening (17a) is temporarily covered with the outlet opening (16) centrally arranged in the counter-spiral (14) at least in sections, and a fluid connection with the counter-pressure chamber (15) is formed, and that
the first passage opening (17a) is connected to the counter-pressure chamber (15) in a fluid-conductive manner at an angular range of the angle of rotation of the orbiting displacement spiral (13) from 435° to 650°.

12. A vehicle air conditioning system comprising a positive displacement machine, in particular a scroll compressor, according to any one of claims 1 to 10.

13. A vehicle with a positive displacement machine according to any one of claims 1 to 10 or a vehicle air conditioning system according to claim 12.

## Revendications

1. Machine volumétrique selon le principe de la spirale, notamment compresseur Scroll, dotée d'une chambre haute pression (11), d'une chambre basse pression (12), d'une spirale à déplacement (13) orbital, d'une contre-spirale (14) et d'une chambre de contre-pression (15), qui est placée entre la chambre basse pression (12) et la spirale à déplacement (13), dans la contre-spirale (14) étant placé dans une zone haute pression un orifice de sortie (16), à travers lequel, en service, un fluide de travail comprimé s'écoule dans la chambre haute pression (11) et la spirale à déplacement (13) comportant au moins un premier et un deuxième orifices de passage (17a, 17b), destinés à assurer la liaison fluidique avec la chambre de contre-pression (15),
**caractérisée en ce que**
au moins le premier orifice de passage (17a) est placé dans la zone de l'orifice de sortie (16), de telle sorte qu'en service, le premier orifice de passage (17a) et l'orifice de sortie (16) se recouvrent temporairement, au moins en parties, dans une zone angulaire de l'angle de rotation de la spirale à déplacement (13) orbital de 435° à 650°, le premier orifice de passage (17a) étant relié en liaison fluidique avec la chambre de contre-pression (15).

2. Machine volumétrique selon la revendication 1,
**caractérisée en ce que**
le deuxième orifice de passage (17b) est placé dans une zone de la spirale à déplacement (13), qui en service fait preuve d'une pression plus faible que la pression dans la zone haute pression.

3. Machine volumétrique selon l'une quelconque des revendications précédentes,
**caractérisée en ce que**
le premier orifice de passage (17a) présente un recouvrement temporaire avec l'orifice de sortie (16) compris entre 1 % et 100 %, notamment entre 10 % et 90 %, notamment entre 20 % et 80 %, notamment entre 30 % et 70 %, notamment entre 40 % et 60 %.

4. Machine volumétrique selon l'une quelconque des revendications précédentes,
**caractérisée en ce que**
en service, temporairement au moins une première et une deuxième chambres de compression (18a, 18b) sont conçues pour recevoir un fluide de travail et le deuxième orifice de passage (17b) est placé dans la spirale à déplacement (13), de telle sorte qu'en service, par le déplacement orbital de la spirale à déplacement (13), le deuxième orifice de passage (17b) soit placé temporairement au moins en parties dans la première chambre de compression (18a) et soit placé ensuite temporairement au moins en parties dans la deuxième chambre de compression (18b).

5. Machine volumétrique selon la revendication 4,
**caractérisée en ce que**
le deuxième orifice de passage (17b) est placé dans la première chambre de compression (18a) dans une zone angulaire de l'angle de rotation de la spirale à déplacement (13) orbital de 95° à 250° et dans la deuxième chambre de compression (18b) dans une zone angulaire de 285° à 650°.

6. Machine volumétrique selon l'une quelconque des revendications précédentes,
**caractérisée en ce que**
le premier et / ou le deuxième orifice de passage (17a, 17b) est placé dans une partie du fond inférieur de la spirale à déplacement (13).

7. Machine volumétrique selon l'une quelconque des revendications précédentes,
**caractérisée en ce que**
le premier et / ou le deuxième orifice de passage (17a, 17b) présente une section transversale circulaire, elliptique ou ovale.

8. Machine volumétrique selon l'une quelconque des revendications précédentes,
**caractérisée en ce que**
le premier orifice de passage (17a) présente un diamètre inférieur à celui du deuxième orifice de passage (17b), les diamètres étant d'un montant compris entre 0,1 mm et 1 mm.

9. Machine volumétrique selon l'une quelconque des revendications précédentes,
**caractérisée en ce que**
le premier orifice de passage (17a) présente un diamètre de 0,3 mm et / ou le deuxième orifice de passage (17b) présente un diamètre de 0,5 mm.

10. Machine volumétrique selon l'une quelconque des revendications précédentes,
**caractérisée en ce que**
la spirale à déplacement (13) et / ou la contre-spirale (14) présentent au moins en parties un chanfrein.

11. Procédé opérationnel d'une machine volumétrique selon le principe de la spirale, notamment d'un compresseur Scroll, doté d'une chambre haute pression (11), d'une chambre basse pression (12), d'une spirale à déplacement (13) orbital, d'une contre-spirale (14) et d'une chambre de contre-pression (15), qui est placée entre la chambre basse pression (12) et la spirale à déplacement (13), dans la contre-spirale (14), dans une zone haute pression étant placé un orifice de sortie (16), la spirale à déplacement (13) comportant un premier et un deuxième orifices de passage (17a, 17b), destinés à assurer la liaison fluidique avec la chambre de contre-pression (15) et le premier orifice de passage (17a) étant placé dans la zone de l'orifice de sortie (16),
lors duquel, en service de la machine volumétrique (10), un fluide de travail compressé s'écoule dans la chambre haute pression (11),
**caractérisé en ce que**
le premier orifice de passage (17a) se recouvre temporairement au moins en parties avec l'orifice de sortie (16) placé au centre de la contre-spirale (14) et une liaison fluidique est créée avec la chambre de contre-pression (15) et **en ce que**
le premier orifice de passage (17a) est relié en conduisant le fluide avec la chambre de contre-pression (15) dans une zone angulaire de l'angle de rotation de la spirale à déplacement (13) orbital de 435° à 650°.

12. Climatisation de véhicule, dotée d'une machine volumétrique, notamment d'un compresseur Scroll selon l'une quelconque des revendications 1 à 10.

13. Véhicule, doté d'une machine volumétrique selon l'une quelconque des revendications 1 à 10 ou d'une climatisation de véhicule selon la revendication 12.
